(19) **Europäisches Patentamt / European Patent Office / Office européen des brevets**

(11) **EP 3 204 195 B1**

(12) **FASCICULE DE BREVET EUROPEEN**

(45) Date de publication et mention de la délivrance du brevet:
**29.08.2018 Bulletin 2018/35**

(21) Numéro de dépôt: **15770953.6**

(22) Date de dépôt: **29.09.2015**

(51) Int Cl.:
**B25J 9/16** *(2006.01)*

(86) Numéro de dépôt international:
**PCT/EP2015/072477**

(87) Numéro de publication internationale:
**WO 2016/055314 (14.04.2016 Gazette 2016/15)**

(54) **PROCÉDÉ DE COMMANDE D'UN SEGMENT DE BRAS ROBOTISÉ PERMETTANT D'EN ADAPTER LA RAIDEUR APPARENTE**

VERFAHREN ZUR STEUERUNG EINES ROBOTERARMSEGMENTS ZUR ANPASSUNG DER SCHEINBAREN STEIFIGKEIT DAVON

METHOD OF CONTROLLING A ROBOTIZED ARM SEGMENT MAKING IT POSSIBLE TO ADAPT THE APPARENT STIFFNESS THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2014 FR 1459600**

(43) Date de publication de la demande:
**16.08.2017 Bulletin 2017/33**

(73) Titulaire: **Commissariat à l'Énergie Atomique et aux Énergies Alternatives 75015 Paris (FR)**

(72) Inventeur: **ABROUG, Neil F-38000 Grenoble (FR)**

(74) Mandataire: **Prouvez, Julien et al Cabinet Boettcher 16, rue Médéric 75017 Paris (FR)**

(56) Documents cités:
**JP-A- H05 297 907    US-A1- 2007 073 442**

- **MEHLING JOSHUA S ET AL: "A model matching framework for the synthesis of series elastic actuator impedance control", 22ND MEDITERRANEAN CONFERENCE ON CONTROL AND AUTOMATION, IEEE, 16 juin 2014 (2014-06-16), pages 249-254, XP032687179, DOI: 10.1109/MED.2014.6961379 ISBN: 978-1-4799-5900-6 [extrait le 2014-11-18]**
- **CHAPEL J D ET AL: "Attaining impedance control objectives using Hinfinity design methods", PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US, vol. CONF. 7, 9 avril 1991 (1991-04-09), pages 1482-1487, XP010023762, DOI: 10.1109/ROBOT.1991.131825 ISBN: 978-0-8186-2163-5**
- **LEE S-H ET AL: "Development of two-axis arm motion generator using active impedance", MECHATRONICS, PERGAMON PRESS, OXFORD, GB, vol. 11, no. 1, 1 février 2001 (2001-02-01), pages 79-94, XP004201729, ISSN: 0957-4158, DOI: 10.1016/S0957-4158(00)00010-6**

**Description**

L'invention est relative à un procédé de commande d'un segment de bras robotisé permettant d'en adapter la raideur apparente.

ARRIERE-PLAN TECHNOLOGIQUE DE L'INVENTION

La manipulation robotique a évolué depuis la manipulation en espace libre (applications de soudure, de levage et positionnement...) à la réalisation de tâches au contact (brossage, insertion, télé-manipulation avec retour d'effort).

Ainsi, plutôt que d'un pur asservissement en position, qui nécessite une connaissance précise de la position de destination et de la trajectoire, le besoin a évolué vers un asservissement plus souple permettant au bras manipulateur de composer avec une connaissance imparfaite de la position de destination.

L'exemple classique est la tâche d'insertion d'une pièce dans un orifice au moyen d'un bras manipulateur. Avec un asservissement en position, il serait nécessaire de disposer d'une connaissance précise de la position de l'orifice pour espérer faire entrer la pièce dans l'orifice.

Pour pallier à cet inconvénient, il est connu de mettre en oeuvre un asservissement en impédance ou en raideur, conférant au bras manipulateur un comportement du type à grande raideur dans la direction d'insertion de la pièce, et un comportement du type à faible raideur dans les directions transverses, permettant au bras manipulateur de réaliser la tâche d'insertion malgré une connaissance imprécise de la position de l'orifice.

Ce type de commande est relativement aisé à mettre en oeuvre si le robot est considéré comme rigide structurellement et que le contrôleur met en oeuvre un correcteur de type proportionnel dérivé, en position, proportionnel intégral en vitesse, ou proportionnel intégral dérivé en effort. En effet, des expressions mathématiques exactes existent entre la raideur souhaitée, les paramètres du modèle du robot, ainsi que ceux du contrôleur, que celui-ci assure ou non la passivité du robot, qui permettent la mise en oeuvre d'un calcul analytique. Dès lors que l'hypothèse de rigidité du robot n'est plus recevable, ou que l'on voudrait mettre en oeuvre d'autres types de contrôleurs, un tel calcul analytique n'est plus possible.

Le document D1 (MEHLING JOSHUA S ET AL: "A model matching framework for the synthesis of series elastic actuator impedance control", 22ND MEDITERRANEAN CONFERENCE ON CONTROL AND AUTOMATION, IEEE, 16 juin 2014, pages 249-254) divulgue un procédé de commande d'un actionneur d'un bras manipulateur avec une loi de commande de type H∞.

OBJET DE L'INVENTION

L'invention a pour objet de proposer un procédé de commande permettant d'adapter la raideur du bras manipulateur à la tâche demandée, sans que celui-ci doive être considéré comme rigide, et pouvant s'adapter à des formes de contrôles variées, non nécessairement réduites à des PID.

PRESENTATION DE L'INVENTION

Modifier la raideur apparente du segment revient à modifier la forme de la fonction de transfert $G(s) = \dot{X}/F$ entre une vitesse $\dot{X}$ (linéaire ou angulaire) du segment et une force externe F subie par le segment de sorte qu'elle soit la plus proche possible d'une fonction de transfert idéale d'un objet de masse (ou d'inertie) M reliée à un bâti par un ressort de raideur K (linéaire ou angulaire), subissant éventuellement un amortissement de taux $c$. On sait qu'une telle fonction de transfert idéale est de la forme

$$\frac{s}{Ms^2 + cs + K}$$

où s la variable de Laplace. Pour la suite, on note $S_F(s)$ la fonction de sensibilité du système segment + contrôleur évaluée au niveau de l'effort subi :

$$S_F(s) = G(s) \cdot J \cdot s$$

où $J$ est la masse (ou l'inertie) du segment à contrôler, à l'exclusion de l'inertie du moteur à contrôler et de tout autre élément intermédiaire, s'ils sont dissociables. On rappelle que la fonction de sensibilité mesure la sensibilité d'une boucle d'asservissement à une perturbation venant s'additionner à un signal donné.

En vue de la réalisation de ce but, on propose selon l'invention un procédé de commande d'un actionneur d'un segment articulé comportant les étapes de :

- Estimer une inertie $J$ du segment ;
- Estimer ou mesurer une vitesse de déplacement X du segment;
- Synthétiser une loi de commande de type $H_\infty$ générant un couple de commande du segment à partir de ces estimations ou mesures et répondant à un objectif de performance portant la fonction de sensibilité en effort :

$$\|S_F(s)\,W_S(s)\|_\infty \leq 1 \quad \texttt{avec} \quad W_S(s) = \left(\frac{Js^2+\varepsilon}{Js^2+cs+K}\right)^{-1}$$

K étant une raideur souhaitée, et c un amortissement souhaité, $\varepsilon$ étant un artefact mathématique ;
- Commander l'actionneur du segment articulé selon la loi de commande ainsi synthétisée.

Selon un aspect particulier de l'invention, la synthèse de la commande est effectuée sous au moins l'une des contraintes suivantes :

- une contrainte portant sur la sensibilité en position ou en vitesse du système segment + contrôleur évaluée, soit : $\|S_X(s)W_S(s)\|_\infty \leq 1$ ou $\|S_{\dot{X}}(s)W_S(s)\|_\infty \leq 1$
- une contrainte portant sur le courant d'alimentation (ou couple de commande) du moteur qui ne doit pas dépasser un seuil donné pour tous les efforts admissibles ;
- une contrainte portant sur les positions des pôles de la loi de commande qui doivent être tous situés en deçà d'une fréquence seuil inférieure à la fréquence de Nyquist ;
- une contrainte portant sur les positions des pôles de la loi de commande qui doivent avoir un amortissement minimal $\xi$.
- une contrainte de passivité selon laquelle la fonction de transfert Force/vitesse doit être réelle positive.

BREVE DESCRIPTION DES DESSINS

L'invention sera mieux comprise à la lumière de la description qui suit d'un mode particulier non limitatif de mise en oeuvre de l'invention, aux références aux figures des dessins annexés parmi lesquels :

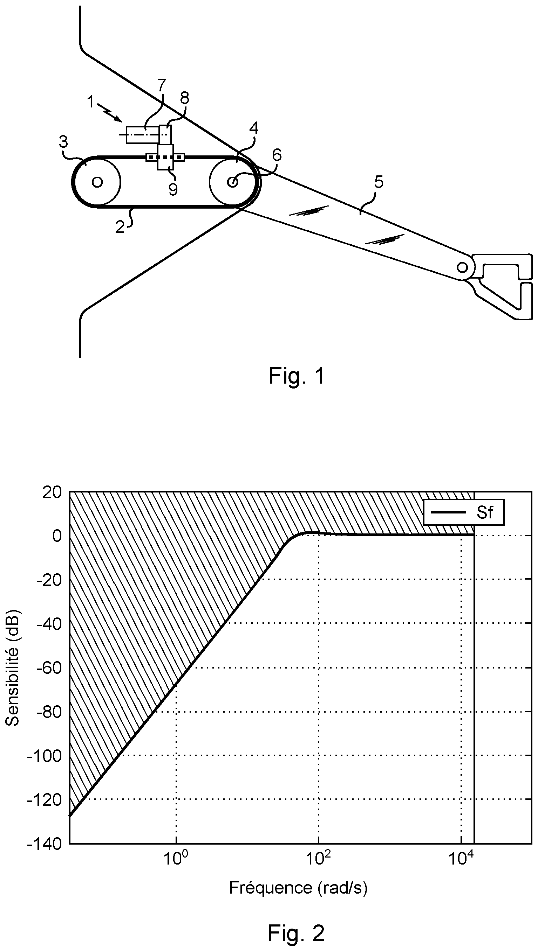

- La figure 1 est une vue schématique d'un segment de bras de comanipulateur actionné au moyen d'un actionneur à câble ;
- La figure 2 est un graphique montrant le diagramme de Bode du segment et la fonction de seuil ;
- La figure 3 est un schéma bloc de l'asservissement mis en oeuvre au moyen de l'invention ;

DESCRIPTION DETAILLEE D'UN MODE DE MISE EN OEUVRE DE L'INVENTION

En référence aux figures, l'invention est ici appliquée à la commande d'un segment articulé d'un bras de robot utilisable en comanipulation. Le robot comporte un actionneur 1 déplaçant un câble 2 enroulée autour d'une poulie de renvoi 3 et d'une poulie articulaire 4 menant un segment 5 articulé selon un axe d'articulation 6. L'actionneur comporte ici un moteur 7 associé à un réducteur 8 qui entraîne l'écrou d'une transmission à billes 9 dont la vis creuse est attelée au câble 2 qui passe à l'intérieur de la vis.

Selon l'invention, on commence par estimer l'inertie J du segment articulé 5 autour de l'axe d'articulation 6. Différentes méthodes sont connues pour estimer une telle inertie. On peut par exemple, à partir de la définition du segment, rapporter les inerties propres de tous les éléments composant le segment à une inertie autour de l'axe d'articulation 6 et sommer toutes ces inerties.

Le procédé de l'invention comporte l'étape de synthétiser une loi de commande de l'actionneur 1 telle que le segment articulé 5 se comporte comme si le segment possédait une raideur K choisie et subissait un amortissement $c$.

Cet amortissement peut se déduire d'un taux d'amortissement $\xi$ par $c = 2\,\xi\sqrt{K\,J}$ .

Pour cela, on mesure la fonction de transfert $G(s) = \dot{X}/F$, où $\dot{X}$ est la vitesse du segment articulé 5, et F est l'effort externe agissant sur le segment articulé 5 (par exemple, le poids d'une charge que le segment soulève). La variable s est la variable de Laplace.

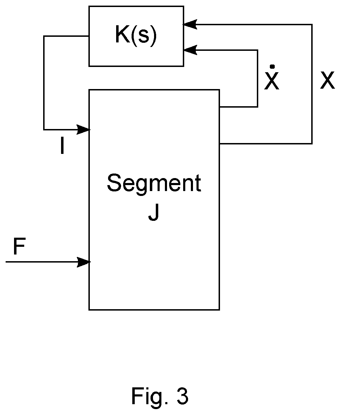

En utilisant les outils classiques de la synthèse $H_\infty$, on détermine une loi de commande dont les entrées sont la vitesse $\dot{X}$ et la sortie est un couple de commande, ici représenté par un courant (ou couple) de commande I, comme cela est schématisé à la figure 3. La synthèse répond l'objectif suivant : $\|S_F(s)W_s(s)\|_\infty \leq 1$, dans lequel le seuil est

$$W_s(s) = \left(\frac{Js^2+\varepsilon}{Js^2+cs+K}\right)^{-1},$$

K étant la raideur souhaitée, et $c$ l'amortissement souhaité, $\varepsilon$ étant un artefact mathématique destiné à éviter des gains infinis en basse fréquence. Dans cet objectif, $S_F(s)$ est la fonction de sensibilité du système segment + contrôleur évaluée au niveau de l'effort subi : $S_F(s) = G(s) \cdot J \cdot s$, où $J$ est la masse (ou l'inertie) du segment. $G(s)$ est la fonction de transfert $G(s) = \dot{X}/F$ entre la vitesse $\dot{X}$ (linéaire ou angulaire) du segment et une force externe F subie par le segment.

C'est-à-dire que l'on impose que la caractéristique dans un diagramme de Bode de la fonction de transfert $S_F(s)$ soit en dessous de la caractéristique de la fonction seuil $W_s(s)$.

Puis une fois la loi de commande synthétisée comme il vient d'être dit, on utilise cette loi de commande pour commander l'actionneur.

Par ailleurs, et selon un aspect particulier de l'invention, on impose au moins l'une des contraintes suivantes :

- une contrainte portant le courant d'alimentation (ou couple de commande) du moteur qui ne doit pas dépasser un seuil donné pour tous les efforts admissibles. Cette contrainte est remplie en imposant que $|I/F|_\infty \leq S$, où $I$ est l'intensité du courant alimentant le moteur de l'actionneur (ou le couple demandé au moteur), et S un seuil déterminé ;

- une contrainte portant sur les positions des pôles de la loi de commande qui doivent être tous situés en deçà d'une fréquence seuil $F_s$ inférieure ou égale à la fréquence de Nyquist ;

- une contrainte de passivité selon laquelle la fonction de transfert transfert Vitesse/Force $H = \frac{\dot{X}}{F}$ doit être réelle positive. on rappelle qu'une fonction de transfert H est réelle positive si $\left|\frac{1-H}{1+H}\right|_\infty < 1$ ;

- une contrainte portant sur la sensibilité du système segment + contrôleur évaluée au niveau de la référence de position selon laquelle : $\|S_X(s)W_s(s)\|_\infty \leq 1$, où $S_X = 1 - \frac{X}{X_{ref}}$, avec $X$ la position du robot et $X_{ref}$ la référence de position ;

- une contrainte portant sur la sensibilité du système segment + contrôleur évaluée au niveau de la référence de vitesse selon laquelle : $\|S_{\dot{X}}(s)W_s(s)\|_\infty \leq 1$ où $S_{\dot{X}} = 1 - \frac{\dot{X}}{\dot{X}_{ref}}$, avec $\dot{X}$ la vitesse du robot et $\dot{X}_{ref}$ la référence de vitesse.

- Une contrainte postant sur l'amortissements des poles du système en boucle fermée selon laquelle ces pôles doivent respecter l'inéquation suivante : $\frac{|Re(p)|}{|p|} \geq \xi$, ou Re dénote la partie réelle des pôles. Cette contrainte a pour effet de renforcer l'exigence d'amortissement exprimée dans la fonction de pondération $W_s$.

Dans les exemples décrits ci-dessous, la raideur K est fixée à une valeur déterminée. Il peut cependant être utile de faire varier la raideur dans le temps. Pour ce faire, et selon une variante de l'invention, on fait explicitement intervenir cette raideur K comme un paramètre exogène variable à la fois dans la fonction de sensibilité et dans la fonction seuil dans l'objectif de performance : $\|S_F(K,s)W_s(K,s)\|_\infty \leq 1$.

Dans cette formulation du problème à résoudre, K est maintenant considéré comme variable. Pour résoudre ce problème pour tout $K_{min} \leq K \leq K_{max}$, il suffit de résoudre simultanément les problèmes :

$$\|S_F(K_{min}, s) \, W_s(K_{max}, s)\|_\infty \leq 1 \quad \text{et} \quad \|S_F(K_{min}, s) \, W_s(K_{min}, s)\|_\infty \leq 1$$

L'invention n'est pas limitée à ce qui vient d'être décrit, mais englobe au contraire toute variante entrant dans le cadre défini par les revendications. En particulier, les caractéristiques inertielles (position, vitesse accélération) du segment de bras peuvent concerner aussi bien des déplacements linéaires que des déplacements angulaires.

**Revendications**

1. Procédé de commande d'un actionneur (1) d'un segment (5) articulé comportant les étapes de :

- Estimer une inertie $J$ du segment ;
- Estimer ou mesurer une vitesse de déplacement X du segment;
- Synthétiser une loi de commande de type $H_\infty$ générant un couple de commande du segment à partir de ces estimations ou mesures et répondant à un objectif de performance portant la fonction de sensibilité en effort :

$$\|S_F(s)\,W_s(s)\|_\infty \leq 1 \ \ \text{avec} \ \ W_s(s) = \left(\frac{Js^2+\varepsilon}{Js^2+cs+K}\right)^{-1}$$

K étant une raideur souhaitée, et c un amortissement souhaité, $\varepsilon$ un artefact mathématique, $S_F(s) = G(s){\cdot}J{\cdot}s,$ où $G(s)$ est la fonction de transfert $G(s) = \dot{X}/F$ entre la vitesse $\dot{X}$ (linéaire ou angulaire) du segment et une force externe F subie par le segment ;
- Commander l'actionneur du segment articulé selon la loi de commande ainsi synthétisée.

2. Procédé de commande selon la revendication 1, dans lequel, la synthèse de la commande est effectuée sous au moins l'une des contraintes suivantes :

- une contrainte portant le courant d'alimentation, ou couple de commande, du moteur qui ne doit pas dépasser un seuil donné pour tous les efforts admissibles, ladite contrainte étant remplie en imposant que $|I/F|_\infty \leq S$, où $I$ est l'intensité du courant alimentant le moteur de l'actionneur (ou le couple demandé au moteur), et S un seuil déterminé ;
- une contrainte portant sur les positions des pôles de la loi de commande qui doivent être tous situés en deçà d'une fréquence seuil $F_s$ inférieure ou égale à la fréquence de Nyquist ;

- une contrainte de passivité selon laquelle la fonction de transfert transfert Vitesse/Force $H = \dfrac{\dot{X}}{F}$ doit être réelle positive. on rappelle qu'une fonction de transfert H est réelle positive si $\left|\dfrac{1-H}{1+H}\right|_\infty < 1 \ ;$
- une contrainte portant sur la sensibilité du système segment + contrôleur évaluée au niveau de la référence de position selon laquelle : $\|S_{\dot{X}}(s)W_s(s)\|_\infty \leq 1$ ;
- une contrainte portant sur la sensibilité du système segment + contrôleur évaluée au niveau de la référence de vitesse selon laquelle : $\|S_{\dot{X}}(s)W_s(s)\|_\infty \leq 1$.
- Une contrainte postant sur l'amortissements des poles du système en boucle fermée selon laquelle ces pôles doivent respecter l'inéquation suivante : $\dfrac{|Re(p)|}{|p|} \geq \xi,$ ou Re dénote la partie réelle des pôles.

3. Procédé selon la revendication 1, dans lequel dans la synthèse de la loi de commande, on fait explicitement intervenir la raideur K comme un paramètre exogène variable à la fois dans la fonction de sensibilité et dans la fonction seuil dans l'objectif de performance :

$$\|S_F(K,s)\,W_s(K,s)\|_\infty \leq 1$$

4. Procédé selon la revendication 3, dans lequel pour résoudre le problème pour tout $K_{min}{\leq}K{\leq}K_{max}$, on résout simultanément les problèmes :

$$\|S_F(K_{min},s)\,W_s(K_{max},s)\|_\infty \leq 1 \ \ \text{et} \ \ \|S_F(K_{min},s)\,W_s(K_{min},s)\|_\infty \leq 1$$

**Patentansprüche**

1. Verfahren zum Steuern eines Aktors (1) eines angelenkten Segments (5), umfassend die Schritte :

- Schätzen einer Trägheit *J* des Segments;
- Schätzen oder Messen einer Bewegungsgeschwindigkeit $\dot{X}$ des Segments;
- Synthetisieren eines Steuergesetzes vom Typ $H_\infty$, das ein Steuermoment des Segments anhand dieser Schätzungen oder Messungen erzeugt und einem Leistungsziel entspricht, das die Beanspruchungs-Empfindlichkeitsfunktion hat:

$$\|S_F(s)\,W_s(s)\|_\infty \leq 1 \quad \text{mit} \quad W_s(s) = \left(\frac{Js^2+\varepsilon}{Js^2+cs+K}\right)^{-1}$$

wobei K eine gewünschte Steifigkeit und c eine gewünschte Dämpfung ist, und ε ein mathematisches Artefakt ist, $S_F(s) = G(s) \cdot J \cdot s$, wobei $G(s)$ die Übertragungsfunktion $G(s) = \dot{X}/F$ zwischen der Geschwindigkeit $\dot{X}$ (linear oder winkelförmig) des Segments und einer äußeren Kraft *F* ist, die von dem Segment erfahren wird;
- Steuern des Aktors des angelenkten Segments gemäß dem so synthetisierten Steuergesetz.

2. Steuerverfahren nach Anspruch 1, bei dem die Synthese der Steuerung unter mindestens einer der folgenden Bedingungen ausgeführt wird:

- eine Bedingung, die den Versorgungsstrom oder das Steuermoment für den Motor betrifft, der bzw. das für alle zulässigen Beanspruchungen einen gegebenen Schwellwert nicht überschreiten darf, wobei die genannte Bedingung von der Anforderung erfüllt wird, dass $|I/F|_\infty \leq S$, wobei *I* die Stärke des Stroms ist, der den Motor des Aktors versorgt (oder das vom Motor geforderte Moment), und S ein vorgegebener Schwellwert ist ;
- eine Bedingung, die die Positionen der Pole des Steuergesetztes betrifft, die sich alle unterhalb einer Schwellwertfrequenz $F_s$ befinden müssen, die kleiner oder gleich der Nyquist-Frequenz ist;

- eine Passivitätsbedingung, gemäß der die Übertragungsfunktion Geschwindigkeit/Kraft $H = \dfrac{\dot{X}}{F}$ reell positiv sein muss; es sei darauf hingewiesen, dass eine Übertragungsfunktion H reell positiv ist, wenn $\left\|\dfrac{1-H}{1+H}\right\|_\infty < 1$ ;

- eine Bedingung, die die Empfindlichkeit des Systems aus Segment + Steuergerät betrifft, die im Bereich der Positionsreferenz evaluiert wird, gemäß der: $\|S_X(s)W_s(s)\|_\infty \leq 1$ ;
- eine Bedingung, die die Empfindlichkeit des Systems aus Segment + Steuergerät betrifft, die im Bereich der Geschwindigkeitsreferenz evaluiert wird, gemäß der:

$$\|S_{\dot{X}}(s)\,W_s(s)\|_\infty \leq 1 \ .$$

- eine Bedingung, die die Dämpfungen der Pole des geschlossenen Regelsystems betrifft, gemäß der diese Pole die folgende Ungleichung erfüllen müssen: $\dfrac{|Re(p)|}{|p|} \geq \xi,$ wobei Re den Realteil der Pole bezeichnet.

3. Verfahren nach Anspruch 1, bei dem man bei der Synthese des Steuergesetzes explizit die Steifigkeit K als veränderlichen exogenen Parameter sowohl in der Empfindlichkeitsfunktion als auch in der Schwellwertfunktion in dem Leistungsziel einsetzt:

$$\|S_F(K,s)\,W_s(K,s)\|_\infty \leq 1$$

4. Verfahren nach Anspruch 3, bei dem zur Lösung der Aufgabe für alle $K_{min} \leq K \leq K_{max}$ gleichzeitig die Aufgaben gelöst werden:

$$\|S_F(K_{min},s)\,W_s(K_{max},s)\|_\infty \leq 1 \quad \text{und} \quad \|S_F(K_{min},s)\,W_s(K_{min},s)\|_\infty \leq 1$$

**Claims**

1. A method of controlling an actuator (1) of a hinged segment (5) including the steps of:

   - estimating an inertia $J$ of the segment;
   - estimating or measuring a movement speed $\dot{X}$ of the segment;
   - synthesizing a control law of type $H_\infty$ generating a control torque for the segment on the basis of these estimates or measurements and meeting a performance objective having the effort sensitivity function:

$$\|S_F(s)\ W_s(s)\|_\infty \le 1 \text{ where } W_s(s) = \left(\frac{Js^2+\varepsilon}{Js^2+cs+K}\right)^{-1}$$

   K being a desired stiffness, and c a desired damping, $\varepsilon$ a mathematical artifact, $S_F(s) = G(s)\cdot J\cdot s$, where $G(s)$ is the transfer function $G(s) = \dot{X}/F$ between the speed $\dot{X}$ (linear or angular) of the segment and an external force $F$ to which the segment is subjected;
   - controlling the actuator of the hinged segment according to the control law thus synthesized.

2. The method as claimed in claim 1, wherein the control synthesis is carried out under at least one of the following constraints:

   - a constraint relating to the supply current or control torque of the motor which must not exceed a given threshold for all of the admissible efforts, said constraint being met by the requirement that $|I/F|_\infty \le S$, where $I$ is the strength of the current powering the motor of the actuator (or the torque required of the motor), and S is a determined threshold;
   - a constraint relating to the positions of the poles of the control law, which poles must all be located below a threshold frequency $F_s$ less than or equal to the Nyquist frequency;
   - a passivity constraint according to which the Speed/Force transfer transfer function $H = \frac{\dot{X}}{F}$ must be positive-real. It is recalled that a transfer function H is positive-real if $\left|\frac{1-H}{1+H}\right|_\infty < 1$;
   - a constraint relating to the segment + controller system sensitivity assessed at the position reference according to which: $\|S_X(s)W_s(s)\|_\infty \le 1$;
   - a constraint relating to the segment + controller system sensitivity assessed at the speed reference according to which: $\|S_{\dot{X}}(s)W_s(s)\|_\infty \le 1$;
   - a constraint relating to the damping of the poles of the closed loop system according to which these poles must comply with the following inequation: $\frac{|Re(p)|}{|p|} \ge \xi$, where Re denotes the real part of the poles.

3. The method as claimed in claim 1, wherein, in the synthesis of the control law, the stiffness K is explicitly included as a variable exogenous parameter both in the sensitivity function and in the threshold function for the purpose of performance:

$$\|S_F(K,s)\ W_s(K,s)\|_\infty \le 1.$$

4. The method as claimed in claim 3, wherein, to solve the problem for all $K_{min} \le K \le K_{max}$, the following problems are solved simultaneously:

$$\|S_F(K_{min},s)\ W_s(K_{max},s)\|_\infty \le 1 \text{ and } \|S_F(K_{min},s)\ W_s(K_{min},s)\|_\infty \le 1.$$

Fig. 1

Fig. 2

Fig. 3

## RÉFÉRENCES CITÉES DANS LA DESCRIPTION

**Littérature non-brevet citée dans la description**

- A model matching framework for the synthesis of series elastic actuator impedance control. **MEHLING JOSHUA S et al.** 22ND MEDITERRANEAN CONFERENCE ON CONTROL AND AUTOMATION. IEEE, 16 Juin 2014, 249-254